# EUROPEAN PATENT APPLICATION

(11) **EP 4 782 179 A1**
(43) Date of publication of application: **29.07.2026**
(21) Application number: 24867805.4
(22) Date of filing: 12.04.2024
(51) Int. Cl.: B29C 48/275, B29B 7/42, B29B 7/82, B29C 48/80, B29C 48/82, B29C 48/255, B29C 48/395, C08J 11/12

(54) **EXTRUSION DEVICE, TREATMENT SYSTEM, AND TREATMENT METHOD**

(30) Priority: 19.09.2023 JP 2023150840
(71) Applicant: The Japan Steel Works, Ltd., Tokyo 141-0032 (JP)
(72) Inventor: UMEDA, Mitsuhide, Tokyo 141-0032 (JP); ISHIGURO, Ryo, Tokyo 141-0032 (JP); SHIGEMATSU, Tomoko, Tokyo 141-0032 (JP); FUKUDA, Mizuka, Tokyo 141-0032 (JP)
(74) Representative: Simmons & Simmons LLP (Munich)
(86) International application number: PCT/JP2024/014767
(87) International publication number: WO 2025/062716

(57) **Abstract**

An extrusion device (11) includes a cylinder (100), a screw (121), a decomposition treatment area (130), an irradiating device (140), and a delivery port (160). The cylinder (100) has a receiving section (110) that receives an object of treatment from the outside. The screw (121) is rotatably accommodated in the cylinder (100) and conveys the object of treatment received from the receiving section (110) to a downstream side while rotating the object of treatment. The decomposition treatment area (130) is a space set up in the cylinder (100). The irradiating device (140) irradiates the object of treatment with microwaves in the decomposition treatment area (130). The delivery port (160) is a flow path on which the object of treatment, which has been conveyed downstream after being irradiated with microwaves, is delivered out of the cylinder (100).

## Description

### Technical Field

The present invention relates to an extrusion apparatus, a processing system, and a processing method.

### Background Art

As a technology for decomposing waste plastic and extracting reusable materials therefrom, there is a method called chemical recycling.

For example, a processing apparatus disclosed in Patent Literature 1 heats waste plastic, thermally decomposes chlorine-based polymers, and thereby generates chlorine compounds. By doing so, the processing apparatus separates waste plastic into molten waste plastic and chlorine compounds.

### Citation List

### Patent Literature

[Patent Literature 1] Japanese Unexamined Patent Application Publication No. 2002-317072

### Summary of Invention

It has been desired to further improve recycling technologies in order to realize the recycling-oriented society.

The present disclosure has been made in order to solve such a problem, and an object thereof is to provide an extrusion apparatus and the like capable of efficiently recovering reusable materials.

An extrusion apparatus according to the present disclosure includes a barrel (a cylinder), a screw, a decomposition processing area, an irradiation apparatus, and a sending-out port. The barrel includes a receiving unit configured to receive a material to be processed from outside thereof. The screw is rotatably housed in the barrel and configured to convey the material to be processed received from the receiving unit to a downstream side while rotating the material to be processed. The decomposition processing area is a space disposed in the barrel. The irradiation apparatus is configured to irradiate the material to be processed with a microwave in the decomposition processing area. The sending-out port is configured to serve as a flow path for sending out the material to be processed conveyed to the downstream side after being irradiated with the microwave to outside of the barrel.

In a processing method according to the present disclosure, a processing system performs the following processes. The processing system receives a material to be processed into a barrel. The processing system conveys the received material to be processed to a downstream side by rotating a screw housed in the barrel. The processing system irradiates the material to be processed with a microwave in a decomposition processing area, the decomposition processing area being a space disposed in the barrel. The processing system sends out the material to be processed conveyed to the downstream side after being irradiated with the microwave to outside of the barrel.

According to the present disclosure, it is possible to provide an extrusion apparatus, a processing system, and a processing method capable of efficiently recovering reusable materials.

### Brief Description of Drawings

Fig. 1 is an overall configuration diagram of a processing system according to a first embodiment;
Fig. 2 is a configuration diagram of an extrusion apparatus according to the first embodiment;
Fig. 3 is a flowchart of a processing method according to the first embodiment; and
Fig. 4 is a configuration diagram of an extrusion apparatus according to a second embodiment.

### Description of Embodiments

The present disclosure will be described hereinafter through embodiments of the present disclosure, but the present disclosure according to the claims is not limited to the below-shown embodiments. Further, not all of the components/structures described in the embodiments are indispensable as means for solving the problem. In order to clarify the explanation, the following descriptions and drawings are omitted and simplified as appropriate. Note that the same reference numerals are assigned to the same elements throughout the drawings, and redundant descriptions thereof are omitted as appropriate.

### <First Embodiment>

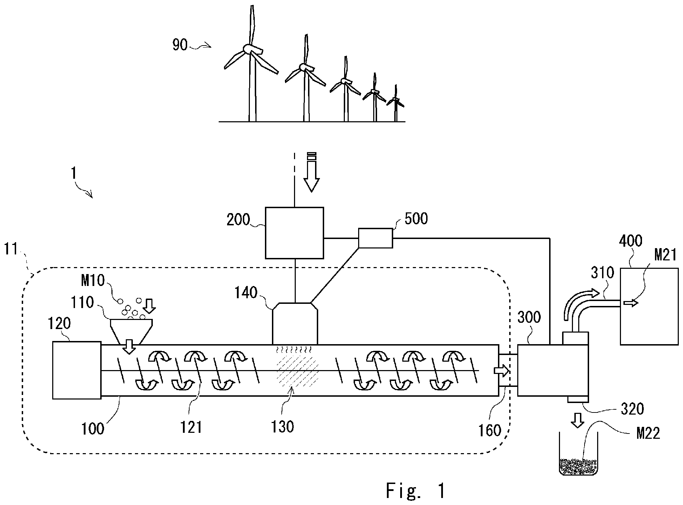

Embodiments according to the present invention will be described hereinafter with reference to the drawings. Fig. 1 is an overall configuration diagram of a processing system according to a first embodiment. Each of the components/structures of the processing system 1 shown in Fig. 1 is schematically shown to facilitate the understanding thereof. The processing system 1 thermally decomposes a material to be processed M10 and recovers a first product M21 and a second product M22. The processing system 1 includes, as main components, an extrusion apparatus 11, a secondary battery 200, a separation apparatus 300, a reservoir 400, and a control unit 500.

The extrusion apparatus 11 will be described hereinafter. The extrusion apparatus 11 receives and thermally decomposes a material to be processed M10. The extrusion apparatus 11 includes, as main components, a barrel 100, a screw 121, a decomposition processing area 130, an irradiation apparatus 140, and a sending-out port 160.

The barrel 100 includes a receiving unit 110 for receiving the material to be processed M10 from the outside thereof on the upstream side. The receiving unit 110 is an opening for receiving the material to be processed M10 from the outside thereof into the extrusion apparatus 11. The receiving unit 110 may include a feeder for receiving the material to be processed M10 while measuring its amount or the like. Further, the barrel 100 includes the sending-out port 160 on the downstream side. The sending-out port 160 serves as a flow path for sending out the thermally-decomposed material to be processed M10 to the outside of the barrel 100.

Note that in the present disclosure, the "upstream side" and the "downstream side" are defined along the flow of the material to be processed M10. That is, after receiving the material to be processed M10 on the upstream side of the barrel 100, the extrusion apparatus 11 conveys the material to be processed M10 to the downstream side, performs a predetermined process(es) thereon, and then sends out the material to be processed M10 to the outside of the barrel 100 on the downstream side.

The material to be processed M10 contains at least a resin and a catalyst used to thermally decompose the resin. The resin is, for example, an arbitrary thermoplastic resin such as polyethylene (PE), polypropylene (PP), polycarbonate (PC), acrylonitrile butadiene styrene (ABS), or polyamide (PA), or is an arbitrary thermosetting resin such as epoxy, unsaturated polyester, polyimide, or polyurethane. Further, the resin may be a composite material in which fibers such as carbon fibers, glass fibers, or cellulose are contained in a thermoplastic resin or a thermosetting resin. The catalyst contains a substance that generates heat when irradiated with predetermined microwaves and thereby accelerates the thermal decomposition of the resin. More specifically, the catalyst is an electromagnetic-wave absorber such as an iron oxide or carbon fibers. Further, the catalyst may also contain a substance that accelerates the thermal decomposition of the resin, such as citric acid.

The screw 121 is rotatably housed in the barrel 100 and conveys the material to be processed M10 received from the receiving unit 110 to the downstream side while rotating the material to be processed M10. The screw 121 includes a shaft extending along the direction in which the barrel 100 extends, and a spiral flight provided on the outer periphery of the shaft. As the shaft of the screw 121 rotates, the flight continuously pushes and moves the material to be processed M10 supplied to the barrel 100 in the rotating direction and in the downstream direction. In this way, the screw 121 conveys the material to be processed M10 to the decomposition processing area 130 while stirring or kneading it.

Further, the extrusion apparatus 11 may include a temperature control device in at least a part of the barrel 100. The temperature control device heats or cools the barrel 100. In this way, for example, the extrusion apparatus 11 can convey the material to be processed M10, which is to be conveyed, while heating it. In this case, the screw 121 can stir or knead the material to be processed M10 heated by the temperature control device while conveying it to the decomposition processing area 130.

The decomposition processing area 130 is a space that is disposed in advance on the downstream side of the receiving unit 110 and on the upstream of the sending-out port 160 in the barrel 100. The decomposition processing area 130 is a space for making the material to be processed M10 absorb microwaves emitted by the irradiation apparatus 140.

If air in the atmosphere enters and remains in the decomposition processing area 130 or the barrel 100, and this air reacts with a gas generated by the material to be processed M10 decomposed by the microwaves, the recovery rates of the first and the second products M21 and M22 decrease. Therefore, the extrusion apparatus 11 preferably has a function of injecting an inert gas such as a nitrogen gas into the barrel 100 and/or the decomposition processing area 130. Further, the extrusion apparatus 11 more preferably has a function of keeping the pressure in a part of the barrel 100 and/or the decomposition processing area 130 below the atmospheric pressure. More specifically, the extrusion apparatus 11 may include, for example, a degassing device for sucking air remaining in the barrel 100 and discharging it to the outside thereof. The degassing device includes, for example, an opening in the upper part of the barrel 100 and discharges the air inside the barrel 100 through this opening. Note that a filter for preventing the material to be processed M10 from leaking may be provided in the opening provided in the barrel 100. By the above-described configuration, the extrusion apparatus 11 can expedite the removal of the air remaining inside the barrel 100.

The irradiation apparatus 140 irradiates the material to be processed M10 with microwaves in the decomposition processing area 130. The microwaves are, for example, electromagnetic waves having a frequency of 300 MHz to 30 GHz, and preferably electromagnetic waves having a frequency of 2.45 GHz (2.45 gigahertz). The irradiation apparatus 140 includes at least a magnetron for generating microwaves. The output of the magnetron is, for example, about 1,000 watts. The irradiation apparatus 140 irradiates the decomposition processing area 130 for, for example, about 1 to 10 minutes with microwaves. Note that the output of the magnetron and the irradiation time of the irradiation apparatus 140 shown above are merely examples, and the operation of the irradiation apparatus 140 in this embodiment is not limited to the example shown here.

As the irradiation apparatus 140 irradiates the decomposition processing area 130 with microwaves, the material to be processed M10 staying in the decomposition processing area 130 is irradiated with the microwaves. Substances that absorb microwaves, such as an electromagnetic-wave absorber, contained in the material to be processed M10, which has been irradiated with the microwaves, are heated, so that their temperatures rise. As a result of this, the resin mixed in the material to be processed M10 is also heated and thermally decomposed. At this point, the temperature in the decomposition processing area 130 is, for example, 400°C to 900°C.

The polymer(s) of the heated resin is decomposed and converted into hydrogen, a lower hydrocarbon(s), an organic gas(s), and other intermediate products. When the irradiation apparatus 140 further applies the microwaves, the thermal decomposition proceeds, and a first product M21 and a second product M22 could be generated from the material to be processed M10. The first product M21 is a gas and contains hydrogen. The second product M22 is a substance(s) other than the first product M21 and contains carbon. The carbon is, for example, CNTs (carbon nanotubes). After the material to be processed M10 is decomposed into the first and second products M21 and M22, the irradiation apparatus 140 stops the application of the microwaves. The thermally-decomposed material to be processed M10 (first and second products M21 and M22) is conveyed to the downstream side of the decomposition processing area 130.

The sending-out port 160 serves as a flow path for sending out the material to be processed M10 conveyed from the decomposition processing area 130 to the outside thereof. The sending-out port 160 is provided at the end on the downstream side of the barrel 100. The sending-out port 160 is connected to the separation apparatus 300. Therefore, the first and second products M21 and M22 pushed out from the decomposition processing area 130 are supplied to the separation apparatus 300 through the sending-out port 160.

The extrusion apparatus 11 has been described above. By the above-described configuration, the extrusion apparatus 11 thermally decomposes the received material to be processed M10, and supplies the first and second products M21 and M22 generated after the thermal decomposition to the separation apparatus 300. Further, the extrusion apparatus 11 may include at least one irradiation apparatus 140 on the downstream side of the receiving unit 110. In this case, the extrusion apparatus 11 can change the conditions for applying microwaves in each of a plurality of irradiation apparatuses 140.

The secondary battery 200 supplies electric power to the extrusion apparatus 11. More specifically, for example, the secondary battery 200 can supply electric power to the irradiation apparatus 140 of the extrusion apparatus 11. The secondary battery 200 is, for example, a lithium-ion battery, a sodium-ion battery, or a lead-acid battery.

Further, the secondary battery 200 can store electric power generated from renewable energy. The secondary battery 200 shown in Fig. 1 receives electric power supplied from a wind power generation system 90. By the above-described configuration, the processing system 1 including the secondary battery 200 thermally decomposes the material to be processed M10 while reducing the environmental burden. Note that the wind power generation system 90 is an embodiment of a power generation system using renewable energy. The power generation system using renewable energy may be, for example, one using solar light or geothermal heat. Further, the power generation system using renewable energy may include, for example, a system for generating electricity by a hydrogen boiler using generated hydrogen.

Note that the secondary battery 200 may be a reused product (reused product). The reused product includes, for example, a product that has been used in an electric vehicle or the like and then removed from the electric vehicle or the like because it no longer meets the specifications for use in the electric vehicle or the like. By adopting a reused product for the secondary battery 200, the processing system 1 can reduce the environmental burden.

The separation apparatus 300 receives the first and second products M21 and M22 from the extrusion apparatus 11, and at least separates the first and second products M21 and M22. The separation apparatus 300 sends out the first product M21 to the reservoir 400 through a sending-out pipe 310. In the reservoir 400, the received first product M21 is stored, for example, in a compressed state. The separation apparatus 300 may have a function of removing gases other than hydrogen from the first product M21 to be supplied to the reservoir 400. For example, when carbon dioxide is contained in the first product M21, the separation apparatus 300 removes the carbon dioxide from the first product M21 by a water replacement method. By the above-described configuration, the separation apparatus 300 extracts hydrogen from the thermally-decomposed material to be processed M10.

Further, the separation apparatus 300 extrudes the separated second product M22 to the outside thereof through a extrusion port 320. The separation apparatus 300 may have a function of, when substances other than carbon are contained in the second product M22, separating carbon from the other substances. By the above-described configuration, the separation apparatus 300 extracts carbon from the thermally-decomposed material to be processed M10.

The control unit 500 is connected to at least the extrusion apparatus 11 so that it can communicate therewith, and controls the operation of the extrusion apparatus 11. The control unit 500 is a control apparatus including an arithmetic unit such as a CPU (Central Processing Unit), a memory, and a communication interface. The control unit 500 may also be connected to the secondary battery 200, the separation apparatus 300, and the irradiation apparatus 140 so that it can communicate therewith, and may control the extrusion apparatus 11 while acquiring data from these apparatuses.

The processing system 1 has been described above. In the processing system 1, the irradiation apparatus 140 of the extrusion apparatus 11 irradiates the material to be processed M10 with microwaves, and thereby heats the material to be processed M10 to a temperature at which hydrogen can be separated therefrom. Further, the irradiation apparatus 140 irradiates the material to be processed M10 with microwaves, and thereby heats the material to be processed M10 to a temperature at which carbon can be separated therefrom. In this way, the separation apparatus 300 separates and extracts hydrogen from the thermally-decomposed material to be processed M10. Further, the separation apparatus 300 separates and extracts carbon from the thermally-decomposed material to be processed M10.

The processing system 1 recovers hydrogen and carbon from the material to be processed M10 by the above-described configuration. The material to be processed M10 includes, for example, waste plastic. The Sustainable Development Goals (SDGs) adopted by the United Nations General Assembly include ensuring sustainable consumption and production. The processing system 1 can contribute to ensuring sustainable consumption and production by recovering reusable hydrogen and carbon from waste plastic. Further, the processing system 1 can receive at least a part of the electric power of apparatuses used in the processing system 1 from renewable energy. In this way, the processing system 1 can contribute to the realization of a sustainable society.

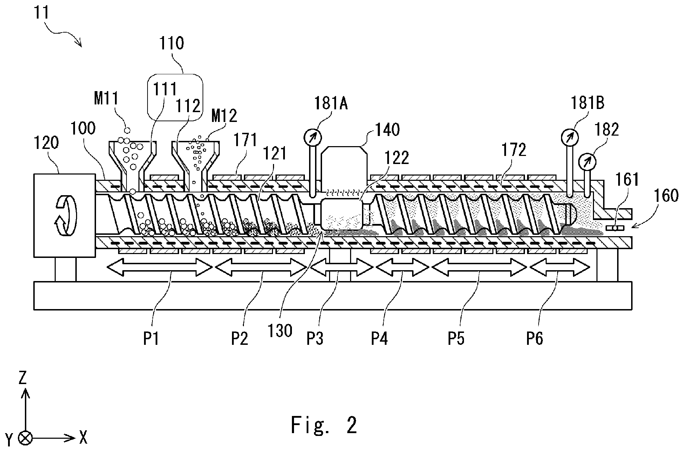

Next, the extrusion apparatus 11 will be further described with reference to Fig. 2. Fig. 2 is a configuration diagram of the extrusion apparatus 11. To facilitate the understanding, a part of the extrusion apparatus 11 is shown in cross section. The extrusion apparatus 11 includes, as main components, a barrel 100, a receiving unit 110, a screw 121, a decomposition processing area 130, an irradiation apparatus 140, a sending-out port 160, and a valve 161. Further, the extrusion apparatus 11 also includes a driving apparatus 120, a heating device 171, a cooling mechanism 172, a thermometer 181A, a thermometer 181B, and a pressure gauge 182.

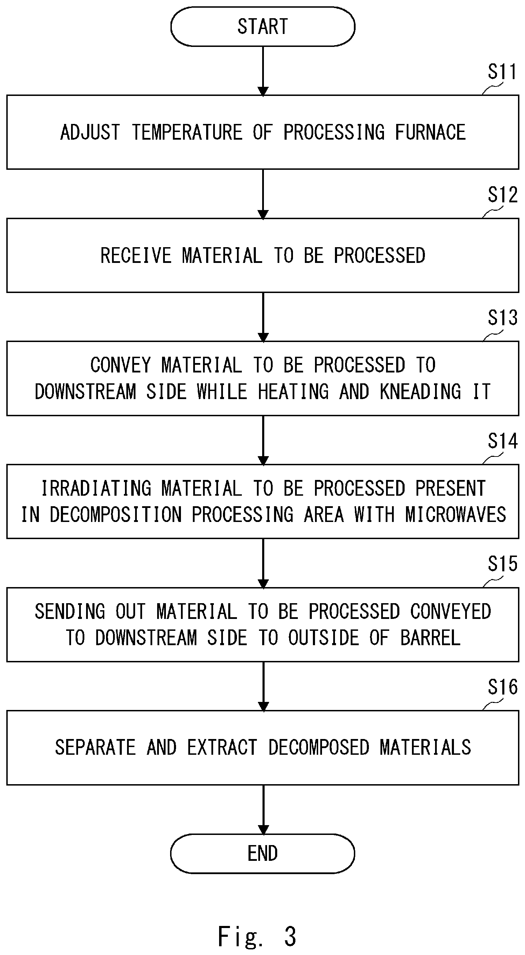

Note that for the sake of explanation of the positional relationship among components, a right-handed orthogonal coordinate system is shown in Fig. 2. Further, in Figs. 3 and subsequent figures, when an orthogonal coordinate system is shown, the X-axis, Y-axis, and Z-axis directions in Fig. 2 coincide with the X-axis, Y-axis, and Z-axis directions in the orthogonal coordinate system.

The barrel 100 is formed in a cylindrical shape and houses a screw 121 therein. The barrel 100 extends in the left-right direction, and the driving apparatus 120 is connected to the end on the upstream side corresponding to the left side. Further, the barrel 100 includes the receiving unit 110 in an upper part on the upstream side thereof. Further, the barrel 100 includes the sending-out port 160 at the end on the downstream side corresponding to the right side in Fig. 2.

The driving apparatus 120 includes a driving apparatus for driving the screw 121. The driving apparatus includes, for example, a motor and a reduction gear. The driving apparatus 120 includes a mechanism for rotating the screw 121. Note that the rotation of the screw 121 means the rotation of the screw 121 along the shaft of the screw 121. As the screw 121 rotates, the material to be processed M10 is conveyed to the downstream side.

The receiving unit 110 includes a first receiving unit 111 and a second receiving unit 112. The first receiving unit 111 is positioned on the upstream side of the second receiving unit 112. The second receiving unit 112 is positioned on the downstream side of the first receiving unit 111. The first receiving unit 111 is a receiving port for receiving a resin M11. The second receiving unit 112 is a receiving port for receiving a catalyst M12.

Note that the receiving unit 110 may include a feeder(s) or a hopper(s). In this case, the receiving unit 110 may have a function of adjusting the amount of the catalyst M12 according to the amount of the resin M11 to be fed. Alternatively, the receiving unit 110 may have a function of adjusting the amount of the resin M11 according to the amount of the catalyst M12 to be fed. By the above-described configuration, the extrusion apparatus 11 can improve the degree of freedom of the combination of the resin M11 and the catalyst M12.

The screw 121 is rotatably supported by the driving apparatus 120 provided at the end on the upstream side of the barrel 100. The screw 121 conveys the material to be processed M10 containing the resin M11 and the catalyst M12 while mixing them. The screw 121 includes at least a shaft extending from the upstream side toward the downstream side, and a spiral flight provided around the shaft. In addition to the spiral flight, the screw 121 may have a concave-convex shape for stirring or kneading the material to be processed M10.

The screw 121 shown in Fig. 2 includes the flight extending from the upstream side on which the screw 121 is supported by the driving apparatus 120 to the immediately front of the decomposition processing area 130. In the screw 121, the flight is not provided in the decomposition processing area 130. The screw 121 includes a thermal decomposition part 122 formed in a cylindrical shape or a barrel shape in the decomposition processing area 130. In the screw 121, the flight is also provided on the downstream side of the decomposition processing area 130. The shape of the screw 121 having the flight extends to the vicinity of the sending-out port 160.

The screw 121 conveys the material to be processed M10 (i.e., a part of material to be processed M10) that is located on the upstream side of the decomposition processing area 130 and has not been thermally decomposed yet to the decomposition processing area 130, and by doing so, pushes the material to be processed (i.e., a part of material to be processed) that has already been thermally decomposed (i.e., first and second products M21 and M22) to the downstream side of the decomposition processing area 130. In this way, the extrusion apparatus 11 can convey the material to be processed M10 located in the decomposition processing area 130 to the downstream side by the rotation of the screw 121 on the upstream side.

By the above-described shape, the screw 121 conveys the resin M11 and the catalyst M12 to the decomposition processing area 130 while stirring or kneading them. Further, the screw 121 prevents the thermal decomposition part 122 from absorbing microwaves in the decomposition processing area 130. In this way, the extrusion apparatus 11 can efficiently thermally decompose the material to be processed M10 in the decomposition processing area 130. Further, the screw 121 conveys the thermally-decomposed material to be processed M10 (first and second products M21 and M22) to the sending-out port 160 on the downstream side of the decomposition processing area 130.

Note that the screw 121 may have a structure for stirring the material to be processed M10 in the decomposition processing area 130. The pitch of the flight of the screw 121 does not have to be uniform. For example, the pitch of the flight of the screw 121 may be set according to the state of the material to be processed M10. Alternatively, the pitch of the flight of the screw 121 may be set according to the speed at which the material to be processed M10 is conveyed. Further, only one screw 121 may be used, or two or more screws 121 may be used.

The heating device 171 is provided on the outer periphery of the barrel 100. The heating device 171 heats the material to be processed M10 that is conveyed from the receiving unit 110 to the decomposition processing area 130 by the screw 121. As the heating device 171 heats the material to be processed M10, the extrusion apparatus 11 efficiently thermally decomposes the material to be processed M10 in the decomposition processing area 130. Examples of the heating device 171 include various heaters whose temperature can be controlled, such as a sheath heater, a coil heater, or a ceramic heater. The heating device 171 may be a heating-medium heater in which a heated fluid is circulated.

The cooling mechanism 172 is a mechanism for suppressing the rise in temperature of the barrel 100. The cooling mechanism 172 includes, for example, a flow path provided inside the wall of the barrel 100, and means for making cooling water flow through the flow path. As the cooling mechanism 172 makes cooling water flow through the flow path provided in the barrel 100, the extrusion apparatus 11 prevents an excessive rise in temperature inside the barrel. The flow path of the barrel 100 provided in the cooling mechanism 172 is divided into a plurality of sections along the direction in which the barrel 100 extends. In this way, the cooling mechanism 172 can, for example, separately control a cooling state on the upstream side of the decomposition processing area 130 and a cooling state on the downstream side of the decomposition processing area 130. In particular, as the cooling mechanism 172 controls the temperature on the downstream side of the decomposition processing area 130, the extrusion apparatus 11 can process the first product M21 more safely. Regarding the means for making cooling water flow through the cooling mechanism 172, for example, a chiller unit (not shown) for circulating a cooled fluid may be adopted. Further, the cooling mechanism 172 may include cooling fins and/or cooling fans for accurately controlling the cooling temperature.

The sending-out port 160 provided at the end on the downstream side of the barrel 100 is a nozzle-like flow path for sending out the conveyed material to be processed M10 (first and second products M21 and M22) to the outside thereof.

The sending-out port 160 includes a valve 161 that can be freely opened or closed. The valve 161 can be opened or closed according to the pressure in the vicinity of the sending-out port 160 in the barrel 100. Alternatively, the degree of opening of the valve 161 can be adjusted according to the pressure in the vicinity of the sending-out port 160 in the barrel 100. By including the valve 161, the extrusion apparatus 11 can prevent the material to be processed M10 from flowing in the backward direction from the separation apparatus 300, to which the extrusion apparatus 11 is connected.

The thermometer 181A is provided in the barrel 100 on the upstream side of the decomposition processing area 130. The thermometer 181B and the pressure gauge 182 are provided in the vicinity of the sending-out port 160 on the downstream side of the barrel 100. The thermometer 181B and the pressure gauge 182 measure the temperature inside the barrel 100 or the pressure inside the barrel 100, which is used as an indicator for controlling the valve 161.

The valve 161 may be set in such a manner that it is closed when the atmospheric pressure is lower than a preset threshold, and is opened when the atmospheric pressure is equal to or higher than the preset threshold. In this way, the extrusion apparatus 11 can safely recover the first product M21.

The irradiation apparatus 140 is provided at a position adjacent to the decomposition processing area 130 in the barrel 100. The irradiation apparatus 140 generates microwaves and irradiates the decomposition processing area 130 with the microwaves. Therefore, the barrel 100 includes a structure by which it makes the microwaves generated by the irradiation apparatus 140 pass through at least a part of the decomposition processing area 130. That is, at least a part of the inner wall of the barrel 100 includes a part where the decomposition processing area 130 can be irradiated with microwaves.

The structure capable of making microwaves pass through the decomposition processing area 130 may be, for example, a structure in which an antenna for irradiating the decomposition processing area 130 with microwaves generated by the irradiation apparatus 140 is exposed. The structure capable of making microwaves pass through the decomposition processing area 130 may be, for example, a structure including a member which makes microwave generated by the irradiation apparatus 140 pass through the decomposition processing area 130 and prevents the material to be processed M10 and the thermally-decomposed first and second products M21 and M22 from passing through the decomposition processing area 130.

The irradiation apparatus 140 may include a thermometer for measuring the temperature in the decomposition processing area 130. The irradiation apparatus 140 may include a pressure gauge for measuring the pressure in the decomposition processing area 130. Further, the irradiation apparatus 140 may include an inverter. The inverter controllably changes the output of microwaves by changing the operating voltage of the magnetron.

In the above-described extrusion apparatus 11, the processing area may be defined (i.e., divided) as an area P1, an area P2, an area P3, an area P4, an area P5, and an area P6 from the upstream side toward the downstream side.

The area P1 is a conveyance area. In the area P1, the screw 121 conveys the received material to be processed M10 (the resin M11 and the catalyst M12) to the downstream side. Further, the screw 121 can apply a pressure to the received material to be processed M10 while conveying it.

The area P2 is a heating area. In the area P2, the screw 121 conveys the material to be processed M10 (the resin M11 and the catalyst M12) to the decomposition processing area 130 while stirring and kneading it. Further, at this point, the heating device 171 heats the conveyed material to be processed M10.

The area P3 is a reaction area. In the area P3, the irradiation apparatus 140 thermally decomposes the material to be processed M10 into a first product M21 and a second product M22. In the area P3, the material to be processed M10, which has been thermally decomposed, is pushed to the further downstream side by the material to be processed M10 conveyed from the area P2.

The area P4 is a conveyance area. In the area P4, the screw 121 conveys the first and second products M21 and M22, which have been thermally decomposed by the irradiation apparatus 140, to the downstream side.

The area P5 is a cooling area. In the area P5, the screw 121 conveys the thermally-decomposed first and second products M21 and M22 to the area P6. At this point, in the area P5, the cooling mechanism 172 controls the cooling of the first and second products M21 and M22 during the conveyance. Since the first and second products M21 and M22 is cooled in the area P5, the user of the extrusion apparatus 11 can safely use the extrusion apparatus 11.

The area P6 is a sending-out area. In the area P6, the sending-out port 160 sends out the first and second products M21 and M22, which have been thermally decomposed and then cooled, to the sending-out port 160.

By the above-described configuration, the extrusion apparatus 11 can continuously and efficiently recover reusable materials.

Next, a processing method performed by the processing system 1 will be described with reference to Fig. 3. Fig. 3 is a flowchart of a processing method according to the first embodiment. The processes described below may be, for example, instructions that the control unit 500 gives to the components of the processing system 1.

Firstly, the extrusion apparatus 11 adjusts the temperature of the barrel 100 which serves as a processing furnace (Step S11). More specifically, the heating device 171 of the extrusion apparatus 11 adjusts, for example, the temperature of the heating area P2 so that the temperature of the barrel 100 falls within a preset range. When doing so, when the temperature exceeds the preset temperature, the extrusion apparatus 11 makes, for example, cooling water flow through the flow path provided in the barrel. In this way, the extrusion apparatus 11 adjusts the temperature of the barrel 100 so that it becomes the set temperature.

Next, the receiving unit 110 of the extrusion apparatus 11 receives a material to be processed M10 (or a resin M11 and a catalyst M12) into the barrel 100 (Step S12).

Next, the extrusion apparatus 11 heats the material to be processed M10 received by the heating device 171, and the screw 121 rotates and conveys the material to be processed M10 while stirring or kneading it (Step S13). The screw 121 supplies the heated and kneaded material to be processed M10 to the decomposition processing area 130 provided on the downstream side thereof.

Next, the irradiation apparatus 140 irradiates the material to be processed M10 conveyed to the decomposition processing area 130 with microwaves (Step S14). The material to be processed M10 is conveyed to the downstream side while being irradiated with the microwaves and thereby being thermally decomposed.

Next, the extrusion apparatus 11 extrudes the material to be processed M10 (first and second products M21 and M22), which has been thermally decomposed in the decomposition processing area 130, from the sending-out port 160 to the outside of the barrel 100 (Step S15).

Next, the separation apparatus 300 of the processing system 1 separates and extracts decomposed substances from the material to be processed M10 received from the extrusion apparatus 11 (Step S16). More specifically, for example, the separation apparatus 300 of the processing system 1 separates and extracts a first product M21 from the material to be processed M10. Alternatively, the separation apparatus 300 further separates and extracts hydrogen from the first product M21. Further, the separation apparatus 300 separates and extracts a second product M22 from the material to be processed M10. Alternatively, the separation apparatus 300 further separates and extracts carbon from the second product M22. Upon the separation apparatus 300 separates and extracts the above-described substances, the processing system 1 finishes the series of processes.

Note that when the above-described series of processes is started, the steps from the step S12 to the step S16 are successively performed in parallel with each other. The processing system 1 thermally decomposes the material to be processed M10 continuously and efficiently by successively performing the above-described series of processes.

Although the embodiment has been described above, the configuration and functions of the processing system 1 are not limited to those described above. The control unit 500 may control the relationship between the rotational speed of the screw 121 and the magnitude of the output of microwaves emitted by the irradiation apparatus 140.

For example, the control unit 500 may control at least one of the output of microwaves to be emitted and the rotational speed of the screw 121 so that the temperatures measured by the thermometer 181A attached on the upstream side of the irradiation apparatus 140 and the thermometer 181B attached on the downstream side thereof reach preset temperatures.

In this case, the control unit 500 may perform control in such a manner that when the temperature measured by the thermometer 181A (first temperature) is lower than the preset temperature, it increases the output of microwaves to be emitted, decreases the rotational speed of the screw 121, and/or increases the output of the heating device 171 attached to the barrel 100. Further, the control unit 500 may perform control in such a manner that when the temperature measured by the thermometer 181A (first temperature) is equal to or higher than the preset temperature, it decreases the output of microwaves to be emitted, increases the rotational speed of the screw 121, and/or decreases the output of the heating device 171 attached to the barrel 100.

Further, the control unit 500 may perform control in such a manner that when the temperature measured by the thermometer 181B (second temperature) is lower than the preset temperature, it increases the output of microwaves to be emitted, decreases the rotational speed of the screw 121, and/or increases the output of the heating device 171 attached to the barrel 100. Further, the control unit 500 may perform control in such a manner that when the temperature measured by the thermometer 181B (second temperature) is equal to or higher than the preset temperature, it decreases the output of microwaves to be emitted, increases the rotational speed of the screw 121, and/or decreases the output of the heating device 171 attached to the barrel 100.

Since the control unit 500 has the above-described function, the extrusion apparatus 11 can continuously and appropriately process the material to be processed M10 while performing feedback control.

The first embodiment has been described above. By the above-described configuration, this embodiment can provide an extrusion apparatus, a processing system, and a processing method capable of efficiently recovering reusable materials.

### <Second embodiment>

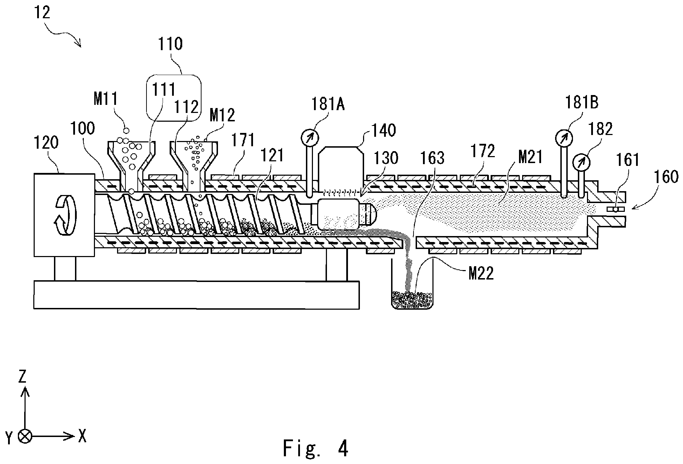

Fig. 4 is a configuration diagram of an extrusion apparatus 12 according to a second embodiment. The structure of the screw 121 of the extrusion apparatus 12 differs from that in the first embodiment. Further, the configuration of the extrusion apparatus 12 related to the processing of the thermally-decomposed material to be processed M10 is different from that in the first embodiment.

The screw 121 according to this embodiment extends from the driving apparatus 120 to the decomposition processing area 130, but does not extend to the vicinity of the sending-out port 160. That is, the extrusion apparatus 12 does not convey the thermally-decomposed first and second products M21 and M22 by the screw 121.

In the extrusion apparatus 12, the barrel 100 includes a residue extrusion port 163 at its lower part between the decomposition processing area 130 and the sending-out port 160. The extrusion apparatus 12 extrudes the second product M22 from the residue extrusion port 163. The barrel 100 includes a slope on the upstream side of the residue extrusion port 163. Since the extrusion apparatus 12 has the slope, the second product M22 easily flows into the residue extrusion port 163.

The sending-out port 160 according to this embodiment sends out the first product M21. The sending-out port 160 according to this embodiment is provided at a relatively high position in the barrel 100 compared with the sending-out port 160 of the barrel 100 shown in the first embodiment. In this way, the sending-out port 160 can easily send out the first product M21, which is a gas, and can prevent a liquid and a solid from being sent out from the sending-out port 160.

By the above-described configuration, the extrusion apparatus 12 can easily separate the thermally-decomposed first and second products M21 and M22. Note that the residue extrusion port 163 may include, for example, a gear pump. In this way, the extrusion apparatus 12 can prevent the first product M21 from flowing out from the residue extrusion port 163.

The second embodiment has been described above. By the above-described configuration, this embodiment can provide an extrusion apparatus, a processing system, and a processing method capable of efficiently separating and recovering reusable materials.

Although the present invention has been described above with reference to the embodiments, the present invention is not limited by the above descriptions. Various modifications that can be understood by those skilled in the art can be made to the configuration and details of the present invention within the scope of the invention. For example, the screw and the barrel of the extrusion apparatus according to the present disclosure are not limited to those of twin-screw extrusion apparatuses. The screw and the barrel of the extrusion apparatus according to the present disclosure may be those of a single-screw extrusion apparatus.

This application is based upon and claims the benefit of priority from Japanese patent application No. 2023-150840, filed on September 19, 2023, the disclosure of which is incorporated herein in its entirety by reference.

### Reference Signs List

- 1: PROCESSING SYSTEM
- 11: EXTRUSION APPARATUS
- 12: EXTRUSION APPARATUS
- 90: WIND POWER GENERATION SYSTEM
- 100: BARREL
- 110: RECEIVING UNIT
- 111: FIRST RECEIVING UNIT
- 112: SECOND RECEIVING UNIT
- 120: DRIVING APPARATUS
- 121: SCREW
- 122: THERMAL DECOMPOSITION UNIT
- 130: DECOMPOSITION PROCESSING AREA
- 140: IRRADIATION APPARATUS
- 150: INJECTION UNIT
- 160: DELIVERY PORT
- 161: VALVE
- 163: RESIDUE DISCHARGE PORT
- 171: HEATING DEVICE
- 172: COOLING MECHANISM
- 181: THERMOMETER
- 182: PRESSURE GAUGE
- 200: SECONDARY BATTERY
- 300: SEPARATION APPARATUS
- 301: FIRST SEPARATION APPARATUS
- 302: SECOND SEPARATION APPARATUS
- 310: DELIVERY PIPE
- 320: DISCHARGE PORT
- 400: STORAGE UNIT
- 500: CONTROL UNIT
- 610: CONVEYANCE DRIVING UNIT
- M10: MATERIAL TO BE PROCESSED
- M11: RESIN
- M12: CATALYST
- M21: FIRST PRODUCT
- M22: SECOND PRODUCT

## Claims

1. An extrusion apparatus comprising:
a barrel comprising a receiving unit configured to receive a material to be processed from outside thereof;
a screw rotatably housed in the barrel and configured to convey the material to be processed received from the receiving unit to a downstream side while rotating the material to be processed;
a decomposition processing area, the decomposition processing area being a space disposed in the barrel;
an irradiation apparatus configured to irradiate the material to be processed with a microwave in the decomposition processing area; and
a sending-out port configured to serve as a flow path for sending out the material to be processed conveyed to the downstream side after being irradiated with the microwave to outside of the barrel.

2. The extrusion apparatus according to claim 1, wherein the screw conveys the material to be processed that is located on an upstream side of the decomposition processing area and has not been thermally decomposed yet to the decomposition processing area, and by doing so, pushes the material to be processed that has already been thermally decomposed to a downstream side of the decomposition processing area.

3. The extrusion apparatus according to claim 1, further comprising:
a heating device configured to heat the material to be processed in a area between the receiving unit and the decomposition processing area; and
a cooling mechanism configured to cool the thermally-decomposed material to be processed in an area between the decomposition processing area and the sending-out port.

4. The extrusion apparatus according to claim 1, wherein
the barrel comprises a pressure gauge configured to measure a pressure in a vicinity of the sending-out port,
the sending-out port comprises a valve configured to open or close according to a predetermined preset pressure, and
the valve is set so as to close when the pressure is lower than a preset threshold and open when the pressure is equal to or higher than the preset threshold.

5. The extrusion apparatus according to any one of claims 1 to 4, wherein
the receiving unit receives the material to be processed containing at least a resin, and
the irradiation apparatus thermally decomposes the material to be processed by irradiating the material to be processed with the microwave so that at least hydrogen can be separated therefrom.

6. The extrusion apparatus according to claim 5, wherein
the receiving unit comprises a first receiving unit configured to receive the resin and a second receiving unit configured to receive a catalyst for accelerating the thermal decomposition, and
the screw conveys the material to be processed containing the resin and the catalyst while mixing them.

7. The extrusion apparatus according to claim 6, wherein the irradiation apparatus thermally decomposes the material to be processed by irradiating the material to be processed with the microwave having a frequency of 300 MHz to 30 GHz.

8. The extrusion apparatus according to claim 5, further comprising:
a thermometer configured to measure a temperature inside the barrel in a vicinity of the decomposition processing area; and
a control unit configured to control at least one of output of the microwave to be emitted and a rotational speed of the screw according to the temperature measured by the thermometer, wherein
when the temperature indicated by the thermometer provided in the barrel on an upstream side of the irradiation apparatus is lower than a preset first temperature, the control unit increases the output of the microwave to be emitted, decreases the rotational speed of the screw, or raises the temperature of the barrel.

9. The extrusion apparatus according to claim 5, further comprising:
a thermometer configured to measure a temperature inside the barrel in a vicinity of the decomposition processing area; and
a control unit configured to control at least one of output of the microwave to be emitted and a rotational speed of the screw according to the temperature measured by the thermometer, wherein
when the temperature indicated by the thermometer is equal to or higher than a preset second temperature, the control unit decreases the output of the microwave to be emitted, increases the rotational speed of the screw, or raises the temperature of the barrel.

10. The extrusion apparatus according to claim 5, further comprising a control unit configured to control a rotational speed of the screw, a magnitude of output of the microwave to be emitted by the irradiation apparatus, and the temperature of the barrel.

11. A processing system comprising:
the extrusion apparatus according to claim 5, and
a separation apparatus configured to separate and extract the hydrogen from the material to be processed sent out from the sending-out port of the extrusion apparatus.

12. The processing system according to claim 11, wherein
the irradiation apparatus of the extrusion apparatus thermally decomposes the material to be processed by irradiating the material to be processed with the microwave so that carbon can be further separated therefrom, and
the separation apparatus further separates and extracts carbon from the thermally-decomposed material to be processed.

13. The processing system according to claim 11, further comprising a secondary battery configured to supply electric power to the irradiation apparatus.

14. The processing system according to claim 13, wherein the secondary battery can store electric power generated by renewable energy.

15. A processing method comprising the steps of:
receiving a material to be processed into a barrel;
conveying the received material to be processed to a downstream side by rotating a screw housed in the barrel;
irradiating the material to be processed with a microwave in a decomposition processing area, the decomposition processing area being a space disposed in the barrel; and
sending out the material to be processed conveyed to the downstream side after being irradiated with the microwave to outside of the barrel.
